# EUROPÄISCHE PATENTSCHRIFT

(11) **EP 3 429 331 B1**
(45) Veröffentlichungstag und Bekanntmachung des Hinweises auf die Patenterteilung: **06.05.2020**
(21) Anmeldenummer: 17712702.4
(22) Anmeldetag: 08.03.2017
(51) Int. Cl.: A01G 9/14, A01G 9/22, A01G 9/20

(54) **MULTIFUNKTIONALE EXTRUDIERTE TRÄGERPROFILE FÜR GEWÄCHSHÄUSER**
MULTIFUNCTIONAL EXTRUDED PROFILED SUPPORTS FOR GREENHOUSES
PROFILÉS DE SUPPORT EXTRUDÉS MULTIFONCTIONNELS POUR SERRES

(30) Priorität: 13.03.2016 EP 16000601
(43) Veröffentlichungstag der Anmeldung: 23.01.2019
(73) Patentinhaber: EBF GmbH, 64625 Bensheim (DE)
(72) Erfinder: SCHREIER, Franz, 64646 Heppenheim (DE)
(74) Vertreter: Benz, Jürgen
(86) Internationale Anmeldenummer: PCT/EP2017/000306
(87) Internationale Veröffentlichungsnummer: WO 2017/157508

(56) Entgegenhaltungen:
- CN-U- 201 758 619
- CN-U- 203 814 284
- DE-C- 867 181
- FR-A1- 3 004 067

## Beschreibung

### Gegenstand der Erfindung:

Die vorliegende Erfindung betrifft ein extrudiertes Trägerprofil aus Leichtmetall, vorzugsweise Aluminium, das als vertikal angeordnetes vorzugsweise mit einer leichter konkaven Krümmung versehenes Trägerprofil bei Foliengewächshäusern zum Einsatz kommen soll. Das Profil verbindet durch seinen Aufbau und seine Beschaffenheit verschiedene Eigenschaften, für die üblicherweise bislang an sich bekannte Einzelkomponenten zum Einsatz gekommen sind. Die Erfindung betrifft ferner Abdeckungskonstruktionen für Gewächshäuser, welche aus den genannten Trägerprofilen aufgebaut sind. Letztlich betrifft die Erfindung Gewächshäuser, insbesondere solche gemäß der chinesischen Lean-To Bauweise mit einer durchschnittlichen Bautiefe von 6 - 12 m, welche mit den besagten Abdeckungskonstruktionen ausgestattet sind.

### Hintergrund der Erfindung:

Dokument DE 867181 C betrifft ein Hohlprofil aus zwei Teilen. "Low-Energy"- oder "No-Energy"-Gewächshäuser erfreuen sich aufgrund ihrer ökologischen und ökonomischen Vorteile eines zunehmenden Interesses. Eine bekannte und häufig verwendete Gewächshaus-Grundstruktur ist in Anlehnung an das chinesische Lean-To konzipiert worden. Dieser Gewächshaustyp ist auf dem asiatischen Markt sehr verbreitet. Alleine in China werden derartige Gewächshäuser auf einer Fläche von etwa 350.000 ha eingesetzt, während in Deutschland der gesamte Unterglas-Gartenbau eine Fläche von etwa nur 3.000 ha einnimmt. Das klassische No-Energy-Gewächshaus zeichnet sich dadurch aus, dass die Nord-, Ost- und West-Wand nicht transparent und aus schweren, Wärme speichernden Baustoffen gestaltet sind. Darüber hinaus sind die Wände, ebenso wie das Dach, sehr gut gegen Wärmeverluste gedämmt. Einzig die einfach konkav gewölbte Südseite ist mit einer transparenten Folie belegt. Aufgrund dieser einfach gewölbten Form der transparenten Fläche ist es nun leicht möglich, einen - und nur einen - temporären Wärmeschutz anzubringen, um das Gewächshaus vollständig vor zu hohen Wärmeverlusten zu schützen. Dies ist bei den typischen europäischen Gewächshäusern (zum Beispiel Venlo-Typ oder Folientunnel) nicht praktikabel und wirtschaftlich unrentabel. Durch die schwere Bauweise der Bauteile (Seitenwände, Nordwand und Teil des Dachs) und deren gute Wärmedämmung sowie durch den temporären Wärmeschutz nutzt das Gewächshaus bestens die tagsüber einfallende Solarenergie. Die Wärme wird in den Bauteilen speichert, wodurch die Klimabedingungen im Gewächshaus - auch ohne Zusatzheizung - in einem für Pflanzen unkritischen Zustand gehalten werden.

Auch wenn die bekannten Gewächshäuser dieses Typs in vielerlei Hinsicht bereits optimiert sind, so weisen sie jedoch einige Nachteile auf, die besonders im Zusammenhang mit der Wärmeregulation, der Entfeuchtung und der Witterungsbeständigkeit der bislang üblichen Materialien und Werkstoffe stehen. So wird die Wärmedämmung des Gewächshauses von der lichtdurchfluteten Südseite bei sehr kalter Witterung und über Nacht durch außen angebrachte Matten bewerkstelligt, welche tagsüber eingeholt werden. Diese Matten sind der Witterung und mitunter sehr hohen Windlasten ausgesetzt. Ferner bleiben die Beschattung bei starker Sonneneinstrahlung (zu hohe Raumlufttemperaturen in heißen Klimata) und die Feuchtigkeitsregulierung innerhalb des Gewächshauses (zu hohe Raumluftfeuchten in kalten Klimata) immer noch ein zu berücksichtigendes Problem.

Es wurde nun gefunden, dass durch Bereitstellung eines neuartigen Trägerprofils, welches mit multifunktionalen Eigenschaften ausgestattet ist, die bekannten Probleme nicht nur beseitigt werden können, sondern darüber hinaus sehr vorteilhafte weitere Eigenschaften für ein Gewächshaus generiert werden, welches mit derartigen Trägerprofilen und aus diesen aufgebauten Abdeckungen ausgerüstet ist.

### Zusammenfassung und Vorteile der Erfindung:

Gegenstand der Erfindung ist eine Trägerprofilstruktur (16) aus Leichtmetall oder auf Basis von Leichtmetall, vorzugsweise Aluminium, Aluminiumlegierungen oder Verbundstoffen mit Aluminium oder anderen Leichtmetallen, umfassend mindestens ein oberes (110) und ein unteres (120) extrudiertes Trägerprofil-Element wobei jedes Trägerprofilelement eine im Wesentlichen rechteckige geschlossene Form mit einer äußeren und einer inneren Stirnfläche und zwei Seitenflächen aufweist, wobei
(i) das obere und untere Trägerprofilelement (110, 120) in Längsrichtung des extrudierten Profils mindestens ein Paar Führungsschienen (8, 12) als Teil des Profils aufweist, die an den gegenüberliegen Seitenflächen jedes Profilelementes im Wesentlichen über deren gesamte Länge angeordnet sind und zur Befestigung, Führung und Bewegung von Folien-, Gewebe- und Dämmflächen inklusive von aktiven oder inaktiven Photovoltaik-Elementen oder -Flächen zur Abschattung vorgesehen sind;
(ii) das obere Trägerprofilelement (110) an seiner äußeren Stirnfläche im Wesentlichen über die gesamte Länge eine Vorrichtung zum Befestigen einer flexiblen spannbaren Folie aufweist, die es mit weiteren Aluminiumprofilen ermöglicht mehrlagig gespannte Folien zu installieren, ohne dass die sogenannte "Luftkissen-Methode" angewandt werden muss;
(iii) das untere Trägerprofilelement (120) an seiner äußeren Stirnfläche mindestens eine im Wesentlichen über die gesamte Länge in das Profil eingelassene Schiene, Vertiefung oder Aussparung (15, 34) zur Aufnahme und Befestigung von Versorgungs-, Beleuchtungs-, Photovoltaik-, und Spannvorrichtungen, Hilfsmitteln, Pflanzenkultursystemen und Werkzeugen oder zur Aufnahme von Mitteln zur Befestigung weiterer Profileinheiten aufweist;
(iv) die mindestens beiden Trägerprofilelemente über ihre inneren Stirnflächen durch ein Wärme-/Kälteisolationselement (36, 39, 40, 41, 42) mit einander verbunden sind, wobei in einer speziellen Ausführungsform das besagte Wärme-/Kälteisolationselement gebildet wird aus einem mit Luft oder einem Wärmeisolierungsmedium (beispielsweise einem Elastomer oder Kunststoff) oder beidem, gefüllten Zwischenraum zwischen dem oberen Profilelement (110) und dem unteren Profilelement (120),
(v) mindestens ein Trägerprofilelement (110, 120) an mindestens einer Seitenfläche eine oder mehrere Bohrungen (4) zur Aufnahme von Querstreben, Stützen, Verbindungen, Rohren, Belüftungselementen oder anderen Bauelementen (5, 6) aufweist, und
(vi) die gesamte Trägerprofilstruktur inklusive ihrer Trägerprofilelemente (100) entlang ihrer Längsachse bogenförmig gebogen ist oder durch an ihr befestigte Spannvorrichtungen (18, 19) bogenförmig verspannt werden kann.

In einer besonderen Ausführungsform der Erfindung wird das besagte Wärme-/ Kälteisolationselement durch mehrere Abstandshalter (40) sichergestellt, welche einen etwa gleichgroßen Zwischenraum zwischen dem oberen und unteren Trägerprofilelement generieren und entlang der Längsausdehnung der Trägerstruktur angeordnet und fixiert sind. Der Zwischenraum kann einfach mit Luft oder auch zusätzlich mit Wärmeisolierungsmedien ausgefüllt sein, während gleichzeitig die Abstandshalter (40) vorzugsweise aus einem Material mit geringer Wärmeleitfähigkeit und hoher Formfestigkeit gefertigt sind. Gegenstand der Erfindung ist somit insbesondere eine entsprechende Trägerprofilstruktur (16), bei der die besagten Abstandshalter (40) an ihren beiden, den Profilelementen zugewandten Enden Einrichtungen (39) aufweisen, die es ermöglichen, sie fest mit entsprechend passenden Einrichtungen (41, 42) an den Stirnseiten der beiden Trägerprofileinheiten (110, 120) zu verbinden, und zwar in der Weise, dass die inneren Stirnseiten der Profilelemente (100), die über die Abstandshalter (40) verbunden werden, eine über die Länge des Profils verlaufende Führungsnut (43) als Teil des extrudierten Profils aufweisen, und die Einrichtungen (39) Köpfe oder Verdickungen an den Abstandshaltern (40) darstellen, die es ermöglichen, dass die Abstandshalter in besagter Führungsnut positioniert und gehalten werden. Dabei stellen die Einrichtungen (41, 42) vorzugsweise Einrastvorrichtungen an den inneren Stirnflächen der Trägerprofilelemente (100, 110, 120) dar, so dass diese durch Zusammenstecken und Einrasten über besagte Abstandshalter miteinander fest und ggf. reversibel verbunden werden können.

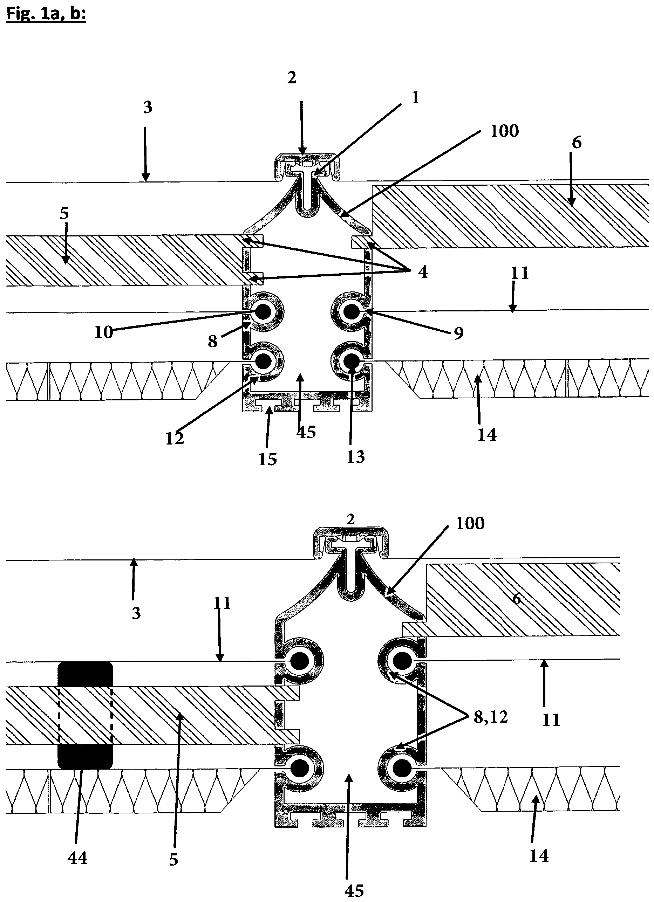

Gegebenenfalls notwendige Abstandhalter (Querstreben) (5) zwischen den Trägerprofilen können mit Rollen (44) ausgestattet werden, um die flexible Photovoltaik-, Abschattungs- oder Dämmflächen zu unterstützen und deren Aus- und Einrollen zu erleichtern. (Fig. 1b) Die funktionalen Flächen werden über eine gemeinsame Achse angetrieben, wobei auch zwei oder mehr Antriebsachsen installiert werden können, die nur ausgewählte Flächenelemente antreibt.

Mittels der erfindungsgemäßen Konstruktion ist zum Unterschied zu bestehenden Systemlösungen eine flexible Anpassung der Eigenschaften der Dachstruktur des Gewächshauses an sich verändernde Außenklimabedingungen und sich verändernde Pflanzenkulturbedingungen möglich.

Gegenstand der Erfindung ist ferner eine entsprechende Trägerprofilstruktur, bei der die Vorrichtung zum Befestigen einer spannbaren flexiblen Folie an der Stirnfläche des oberen Trägerprofilelements (110) einen im Wesentlichen über die gesamte Länge des Profilelementes verlaufenden Adapter (1) als Teil des extrudierten Profils sowie ein entsprechend gestaltetes und positioniertes Befestigungs- oder Klemmprofil (2) umfasst, wobei die flexible Folie oder das Gewebe oder Dämmmaterial nach Einlegen zwischen Adapter und aufsteckbaren Klemmprofil durch Verkürzen gespannt und festgeklemmt werden kann. Gegebenenfalls können hier auch mehrere Folien (3) eingespannt werden.

In einer Ausführungsform der Erfindung weist der Adapter (1) einen Wulst für das Klemmprofil (2) und eine Befestigungsnut auf, in welcher Befestigungsmittel, beispielsweise eine Verschraubung, für das Klemmprofil Platz finden. Generell sind hier auch andere bekannte technische Umsetzungen denkbar und geeignet.

In einer einfacheren Ausführungsform der Erfindung ist die Trägerprofilstruktur (16) nur einteilig also ungeteilt, wobei eine solches einteiliges Trägerprofilelement (100)
(a) eine im Wesentlichen rechteckige geschlossene Form mit einer äußeren und einer inneren Stirnfläche und zwei Seitenflächen aufweist,
(b) in Längsrichtung des extrudierten Profils mindestens ein Paar Führungsschienen (8, 12) als Teil des Profils aufweist, die an den gegenüberliegen Seitenflächen jedes Profilelementes im Wesentlichen über deren gesamte Länge angeordnet sind und zur Befestigung, Führung und Bewegung von Folien-, Gewebe- und Dämmflächen inklusive von aktiven oder inaktiven Photovoltaik-Elementen oder -Flächen zur Abschattung vorgesehen sind,
(c) an seiner äußeren Stirnfläche im Wesentlichen über die gesamte Länge eine Vorrichtung zum Befestigen einer spannbaren flexiblen Folie aufweist, wobei die Vorrichtung einen im Wesentlichen über die gesamte Länge des Profilelementes verlaufenden Adapter (1) als Teil des extrudierten Profils sowie ein entsprechend gestaltetes und positioniertes Befestigungs- oder Klemmprofil (2) umfasst, so dass die flexible Folie nach Einlegen zwischen Adapter und aufsteckbaren Klemmprofil durch Verkürzen gespannt und festgeklemmt werden kann,
(d) an seiner inneren Stirnfläche mindestens eine im Wesentlichen über die gesamte Länge in das Profil eingelassene Schiene, Vertiefung oder Aussparung (15, 34) zur Aufnahme und Befestigung von Versorgungs-, Beleuchtungs-, Photovoltaik-, und Spannvorrichtungen, Hilfsmitteln, und Werkzeugen oder zur Aufnahme von Mitteln zur Befestigung weiterer Profileinheiten aufweist,
(e) an mindestens einer Seitenfläche eine oder mehrere Bohrungen (4) zur Aufnahme von Querstreben, Stützen, Verbindungen, Rohren, Belüftungselementen oder anderen Bauelementen (5, 6) aufweist, und
(f) entlang seiner Längsachse bogenförmig gebogen ist oder durch an ihm befestigte Spannvorrichtungen (18, 19) bogenförmig verspannt werden kann.

Einteilige Trägerprofile sind einfacher bei Herstellung und Handhabung, haben jedoch den Nachteil, dass bei Verwendung von Leichtmetallen, wie insbesondere Aluminium, welche eine hohe Wärmeleitfähigkeit haben, bei starken Temperaturunterschieden zwischen den Außenflächen des Profils Kondensationsprobleme auftreten können, insbesondere dann, wenn das Trägerprofil mit sehr feuchter warmer oder kalter Luft in Berührung kommt. Da die erfindungsgemäßen Trägerprofile insbesondere für den Einsatz als Abdeckungsflächen in Gewächshäusern vorgesehen sind, bei denen große Feuchtigkeitsunterschiede der Luft zwischen Innen- und Außenraum meist unvermeidbar sind ist dieses Problem besonders relevant. Durch die Aufteilung der Profilstruktur (16) in mehrere, vorzugsweise zwei Teileinheiten (110, 120), welche durch erfindungsgemäße Einführung von Wärme-/ Kälteisolierschichten bzw. -räumen zwischen den besagten Teilstrukturen, miteinander in Verbindung stehen, kann dieses Problem erfolgreich gelöst werden. Bei einteiliger Ausführung der Trägerprofilstruktur (100) empfiehlt es sich daher, bei zu erwartenden größeren Temperaturunterschieden am Aufstellungsort des Gewächshauses, diese Trägerprofile entweder an ihrer Außenfläche mit Materialien zu beschichten, die eine geringe Wärmeleitfähigkeit aufweisen, oder aber das hohle Innere der Profile selbst aktiv oder passiv zu belüften und / oder die Luft darin zu entfeuchten bzw. zu temperieren. Gegenstand der Erfindung ist auch ein modulares Trägerprofilsystem, welches eine Trägerprofilstruktur (16) umfasst, bei der zwischen dem oberen Trägerprofilelement (110) und dem unteren Trägerprofilelement (120) ein oder mehrere weitere Profilelemente angeordnet sind, welche mindestens in Längsrichtung des extrudierten Profils ein Paar Führungsschienen (8, 12) als Teil des Profils aufweisen, die an den gegenüberliegen Seitenflächen jedes Profilelementes im Wesentlichen über deren gesamte Länge angeordnet sind und zur Befestigung, Führung und Bewegung von Folien-, Gewebe- und Dämmflächen inklusive von aktiven oder inaktiven Photovoltaik-Elementen oder -Flächen vorzugsweise zur Abschattung vorgesehen sind. Die weiteren Profilelemente können untereinander und mit den äußeren Trägerprofilelementen (110, 120) über ihre jeweils inneren Stirnflächen wiederum durch ein Wärme-/ Kälteisolationselement (36, 39, 40, 42) mit einander verbunden sein. Wie bereits erwähnt, sind die erfindungsgemäßen Trägerprofilstrukturen (16) insbesondere als Skelettstrukturen für Abdeckungen von Gewächshäusern vorgesehen. Durch ihr besonderes extrudiertes Profil, weisen sie bereits viele der notwendigen technischen Ausstattungen auf, die zum Betrieb eines langlebigen Gewächshauses unter ökologischen und ökonomischen Bedingen notwendig sind, und überdies durch bekannte Extrusionstechniken recht einfach herzustellen sind.

Gegenstand der Erfindung ist somit auch eine Abdeckungskonstruktion für ein Gewächshaus, insbesondere Foliengewächshaus, umfassend mindestens zwei Trägerprofilelemente oder modulare Profilsysteme wie oben und in den Ansprüchen näher beschrieben, wobei die Trägerprofilelemente (110, 120) über starre Verbindungselemente (5, 6) die über entsprechende bereits vorgefertigten Bohrungen (4) in den Seitenflächen der Profilelemente miteinander in Verbindung stehen und so eine entsprechende steife Fläche bilden.

Die erfindungsgemäße Abdeckungskonstruktion zeichnet sich insbesondere durch folgende Merkmale aus:
- eine lichtdurchlässige Folie (3), vorzugsweise aus ETFE oder Kunststoffen mit vergleichbaren Eigenschaften, welche vorzugsweise mittels einer Klemmvorrichtung (1, 2) verspannt werden kann und die Außenhaut der Abdeckungskonstruktion bildet;
- eine manuell oder durch Motorkraft aufrollbare oder faltbare Wärme-/ Kältedämmungsmatte, Folie oder Flies (14), welche in den Führungsschienen (12), die hinter der Außenfolie (3) innenliegend in den Trägerprofilelementen (110, 120) angeordnet sind, über Führungsseile oder ähnliche Mittel (13) bewegt werden kann, und so im Gegensatz zu den bekannten Lean-To- oder "No-Energy"- Gewächshäusern vor Witterungseinflüssen geschützt sind, wodurch sie viel länger haltbar sind; und
- eine manuell oder durch Motorkraft aufrollbare, faltbare oder klappbare photovoltaisch aktive oder inaktive Beschattungseinrichtung (11), vorzugsweise in Form eines Gewebes, eines Laminats oder einer Lamellenstruktur, oder auch einer Photovoltaik-Solarfolie welche in besagten Führungsschienen (8), die hinter der Außenfolie (3) innenliegend in den Trägerprofilelementen (110, 120) angeordnet sind, über Führungsseile (10) oder andere Antriebssysteme bewegt werden kann.

Vorzugsweise besitzt die erfindungsgemäße Abdeckungskonstruktion von außen nach innen zunächst eine lichtdurchlässige verspannte Folie (3), gefolgt von einer Beschattungseinrichtung (photovoltaisch aktiv oder inaktiv) (11), und schließlich einer zum Innenraum abschließenden besagten Wärme-/ Kältedämmungsmatte (14), wobei letztere ggf. lichtundurchlässig ist und / oder auf der nach innen weisenden Seite eine Licht reflektierende oder Licht streunende Beschichtung aufweisen kann.

Um dem bereits oben angesprochenen generell bei Gewächshäusern auftretenden Problem der Belüftung und Entfeuchtung zu begegnen, besitzt die erfindungsgemäße Abdeckungskonstruktion in einer bevorzugten Ausführungsform eine aktive (z.B. durch Ventilatoren und / oder Luftentfeuchtern) oder passive Entfeuchtungs- und / oder Belüftungseinrichtung für den Raum zwischen äußerer Folie (3) und Beschattungseinrichtung (11), oder zwischen äußerer Folie (3) und Wärme-/ Kältedämmungsmatte / Thermorollo (14) und / oder für den Raum innerhalb der Trägerprofilelemente (110, 120). Dies kann sehr einfach durch entsprechende Öffnungen an geeigneten Stellen in der Konstruktion bewerkstelligt werden, durch welche unterschiedlich feuchte und temperierte Luft zirkulieren kann. Hierdurch kann die Raumluft des Gewächshauses kontrolliert bis auf das erforderliche Maß entfeuchtet werden. Eine unkontrollierte stärkere Entfeuchtung verursacht unnötig hohe Wärmeverluste.

Gegenstand der Erfindung ist letztlich ein Foliengewächshaus, auf Basis der chinesischen Lean-To Bauweise, welches mindestens eine Abdeckungskonstruktion, wie beschrieben, mit den entsprechenden erfindungsgemäßen extrudierten Trägerprofilelementen aufweist. Ein solches erfindungsgemäßes Gewächshaus wird so zu einem integrierten Food & Energy System (IFES). Das hier beschriebene Extrusionsträgerprofil (16), bzw. die hieraus gebildeten Trägerprofilelemente (110, 120) vereint die Funktionen mehrerer an sich bekannter einzelner Profile in einem. Neben den Befestigungsmöglichkeiten für mehrere Lagen lichtdurchlässiger Folie und Raum für die bedarfsangepasste Befestigung von Quer- und Stützstreben, sind gleichzeitig noch zwei Führungsschienen sowie ein modulares Befestigungssystem z.B. für Beleuchtung und Photovoltaik-Einrichtungen sowie für Pflanzenkultursysteme integriert. Durch die Integration der oben genannten Eigenschaften in einem einzigen Profil, können nun weitere Komponenten, die üblicherweise für die genannten Einzelaufgaben verwendet werden, wegfallen. Durch weniger Komponenten im oberen lichtdurchlässigen Bereich des Gewächshauses ergibt sich so weniger Abschattung im Bodenbereich, und somit kann mehr Licht, welches einen wichtigen Produktionsfaktor darstellt, die Pflanzen erreichen. Durch das Thermorollo, die ggf. doppelte Folienschicht, sowie zusätzlich auch die Beschattungseinrichtung (Schattengewebe) kann eine thermische Isolation erzielt werden, die es ermöglicht, im Inneren des Gewächshauses eine deutlich höhere Temperatur als außerhalb über lange Zeiträume aufrecht zu erhalten. Die als integraler Bestandteil des extrudierten Profils vorliegenden Führungsschienen bzw. extrudierte Hohlvolumina (8, 12), welche die manuell oder elektrisch betriebenen Zugvorrichtungen (10, 13) für die verschiedenartigen Beschattungs- und Wärmeschutzeinrichtungen (11, 14) aufnehmen sollen, sind wie die Zugvorrichtungen (Seile, Stangen, etc.) selbst somit vor äußeren Einflüssen, z.B. vor UV-Strahlung, geschützt, und gleichzeitig minimiert sich die Gefahr für Menschen im Gewächshaus, sich an den Zugvorrichtungen zu verletzen. Da die Wärmeschutzrollos (14, 24) nun im Inneren des Gewächshauses angebracht werden können, sind diese ebenfalls vor genannten äußeren Einflüssen geschützt. Gleichzeitig erlauben die nun innenliegenden Rollos eine Abschattung bzw. Wärmedämmung bei, im Bedarfsfall, gleichzeitig geöffneten Lüftungsklappen (23). Weiterhin erlaubt die erfindungsgemäße Bauweise der Abdeckungskonstruktion, eine einfache und sehr effiziente Belüftung und Regulierung der Temperatur und Feuchtigkeit im Inneren und an den Flächen der Konstruktion, so dass übliche Kondensationsprobleme vermindert oder vermieden werden können. Ferner kann die gewünschte Biegung der Profilträger und damit der Abdeckungskonstruktion leicht und variabel durch Spanneinrichtungen (18, 19) erreicht werden. Im Falle der zwei- oder mehrteiligen Profilelemente, die über Abstandshalter und Einrastmechanismus zusammengehalten werden, kann durch entsprechende Fertigungsmaßnahmen die gewünschte Krümmung bereits bei Zusammenfügung erreicht werden, so dass auf zusätzliche Spannmittel verzichtet werden kann.

Die spezielle Anordnung von photovoltaisch aktiven Flächen (Abschattungseinrichtungen) direkt unterhalb der transparenten Eindeckung des Gewächshauses bewirkt eine deutliche Temperaturerhöhung der solchen. Dies ist bei allen photovoltaischen System mit positivem Temperaturkoeffizient von erheblichem Vorteil. Bei steigender Temperatur der Photovoltaik erhöht sich deren Effizienz und somit die solaren Erträge. Dies ist insbesondere für organische Photovoltaik (PV)-Materialien der Fall, wie beispielsweise in WO 2006/092134, WO 2010/006595, WO 2013/168084 und WO 2015/011174 beschrieben. Eine derartige Ausgestaltung der Dachstruktur eines Gewächshauses lässt eine vollständige Verdunklung des Innenraums zu, was für die Kulturführung bestimmter Pflanzen von essentieller Bedeutung ist (Verkürzung der Photoperiode). Dies ist bei konventionellen Gewächshäusern (z.B. Venlo-Typ) nicht oder nur mit erheblichem Aufwand möglich.

### Detaillierte Beschreibung der Erfindung:

Oben, unten und in den Abbildungen werden folgende Bezugsgrößen verwendet:
- 1.: Adapter für Klemmprofil (2)
- 2.: Klemmprofil für ETFE-Folien
- 3.: Lichtdurchlässige transparent oder semitransparente Folie
- 4.: Bohrungen für die Aufnahme von Querstreben
- 5.: Querstrebe zur Stabilisierung
- 6.: Querstrebe als Anschlag für Lüftungsklappe
- 8.: Führungsschiene für Beschattungsgewebe (11)
- 9.: Schlitzförmige Öffnung
- 10.: Führungs-Seil des Beschattungsgewebes (11)
- 11.: Beschattungsgewebe bzw. Solarfolie (photovoltaisch aktiv oder inaktiv)
- 12.: Führungsschiene für Wärmeschutzrollo (14)
- 13.: Führungs-Seil des Wärmeschutzrollos (14)
- 14.: Wärmeschutzrollo
- 15.: Vertiefungen zur Aufnahme von Halfen-Schrauben (Modulares Befestigungssystem)
- 16.: Extrudiertes Aluminiumprofil
- 17.: Endkappen / Abschluss des Aluminiumprofils
- 18.: Stahlseil zum Spannen des Aluminiumprofils
- 19.: Haltepunkte für o.g. Stahlseil
- 20.: Abstandshalter
- 21.: Querstrebe zur Stabilisierung
- 22.: Querstrebe als Anschlag für Lüftungsklappe
- 23.: Lüftungsklappe
- 24.: Aufgerolltes Beschattungsgewebe/ Wärmeschutzrollo
- 25.: Beschattungsgewebe
- 26.: Wärmeschutzrollo
- 27.: Gitterträger
- 28.: Stahlträger
- 29.: Isolierung/ Wärmedämmung
- 30.: Stützwinkel
- 31.: Betonfundament
- 32.: Regenrinne
- 33.: Erdreich
- 34.: Halfen-Montageschienen
- 35.: Riffelung auf der Oberfläche des Aluminiumprofils
- 36.: Isolierendes Gummi-Profil
- 37.: Halfen-Schraube
- 38.: Mutter zur Befestigung der Halfen-Schraube (37)
- 39.: Köpfchen des Abstandhalters
- 40.: Abstandshalter (Strebe)
- 42.: Flexible Einrastkante
- 43.: Führungsnut für Abstandshalter 39,40
- 44.: Führungsrolle für Beschattungsgewebe-/folie bzw. Solarfolie
- 45.: Hohlvolumen der Trägerprofilelemente 100, 110, 120
- 100.: in sich geschlossenes Trägerprofilelement
- 110.: in sich geschlossenes oberes Trägerprofilelement
- 120: in sich geschlossenes unteres Trägerprofilelement
Das erfindungsgemäße Trägerprofil (16) ist in der einfachsten Ausführungsform der Erfindung dafür vorgesehen, durch ein an dem modularen Befestigungssystem befestigten Stahlseil, welches sich über die gesamte Länge des Trägerprofils zieht, derart auf Spannung gebracht zu werden, dass sich eine - der Gewächshauskonstruktion angepasste - leichte nach außen gerichtete Krümmung des Profils ergibt.

Das erfindungsgemäße Trägerprofil (16) ist ein Extrusionsprofil, vorzugsweise aus Aluminium oder Aluminiumlegierungen, wird also in einem Stück durch an sich bekannte Extrusionstechniken hergestellt. Es bildet ein in sich geschlossenes Trägerelement in Form von vorzugsweise gleichmäßig oder ungleichmäßig gekrümmten Hohlschienen. Das Volumen der Hohlschienen kann erfindungsgemäß für andere technische Vorrichtungen oder Maßnahmen eingesetzt werden (Versorgungsleitungen, Kühlung, Heizung, etc.).

Die Maße der Trägerprofilelemente in ihrer einteiligen Form (100) können wie folgt angegeben werden: Breite: 3 - 8 cm, vorzugsweise ca. 5 cm / Tiefe: 5 - 15 cm, vorzugsweise ca. 10 cm / Länge: bis ca. 8 m. Die zweiteilige Profilkonstruktion hat als Ganzes gleiche oder nur geringfügig abweichende Maße. Das obere Profilelement (110) und das untere Profilelement (120) haben dann entsprechend der verwendeten thermischen Isolation zwischen ihnen eine geringere Tiefe, so dass sich an der Gesamttiefe des Profils nur wenig ändert.

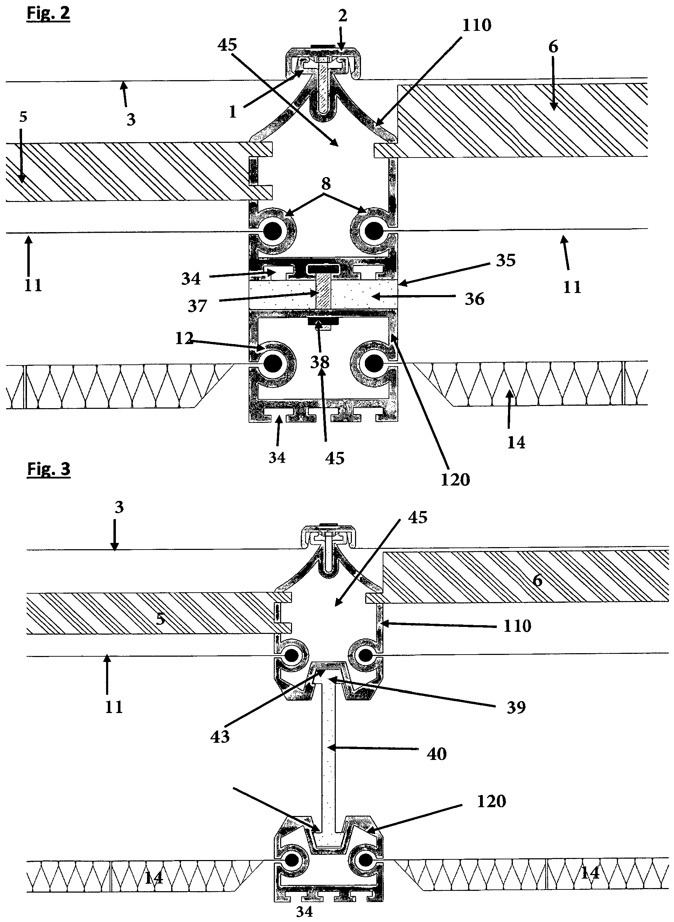

Die Oberseite des Profils ist über die gesamte Länge auf einer Breite von 1 - 3 cm vorzugsweise mittig als wulstförmiger Adapter (1) ggf. mit einer Längsnut für ein Klemmprofil (2) gestaltet, so dass es vorzugsweise mit an sich bekannten Klemmprofilen oder Klemmeinrichtungen kompatibel ist. Diese erlauben es, über die gesamte Länge des Profils eine oder auch mehrere Lagen lichtdurchlässiger Folie (3) (z.B. ETFE Folie) als Abgrenzung nach außen zu befestigen. Bei Verwendung mehrerer Folien ist der Einsatz von Abstandshaltern zwischen den Folien empfehlenswert. Die Klemmung kann auch zusätzlich durch Befestigungsschrauben gesichert werden (Fig. 1, Fig. 2). Unterhalb, bzw. links und rechts von diesem Adapter verbreitert sich das Profil auf die volle Breite (z.B. 5 cm).

An den Seitenflächen des Profils über deren gesamte Länge ist Platz für Bohrungen (4) vorgesehen, die je nach Bedarf Quer- oder Stützstreben (5; 21) aufnehmen können, um die vertikal angeordneten Trägerprofile untereinander, oder mit dem Rumpf des Gewächshauses, zu verbinden und somit zu stabilisieren. Neben den Querstreben zur Stabilisierung (5; 21) passen auch andersartig gestaltete Streben (6; 22) in die bedarfsangepassten Bohrungen (4): Auf diese Querstreben können Rollen (z.B. gleitgelagert) aufgesteckt werden, mit denen die z.B. die photovoltaischen Abschattungseinrichtungen abgestützt werden und somit leicht bewegt (aus- und eingebracht) werden können. Am oberen Ende des Trägerprofils können Querstreben (6; 22) angebracht werden, die als Anschlag für Lüftungsklappen (23) im Deckenbereich des Gewächshauses dienen (Fig. 1, 2, 3 und 6).

An den Seitenflächen befinden sich auf beiden Seiten von außen nach innen betrachtet (Fig. 1, 2, 3 und 6) in das Profil eingelassene Führungsschienen (8). Diese sind beispielsweise derart gestaltet, dass sie eine ins Innere des Aluminiumprofils ausgearbeitete abgerundete Vertiefung darstellen (8), die sich jeweils auf beiden Seiten über die gesamte Länge des Aluminiumprofils ziehen und sich durch eine schlitzförmige Öffnung (9) nach außen hin öffnen. Diese Führungsschienenteile (8, 9) ermöglichen die Aufnahme von Führungsseilen (10); in diesem Falle für die Führung einer Abschattungsfläche, bzw.einer Beschattungsstruktur (11; 25) oder einer vergleichbaren Beschattungseinrichtung (photovoltaisch aktiv oder inaktiv), welche zwischen den Profilen aus vom Deckenbereich des Gewächshauses bis in den vorderen unteren Bereich aufgespannt werden können. Die Abschattungsfläche kann ein Gewebe, ein lamellenartiges Konstrukt oder auch eine lichtfilternde, -reflektierende oder -absorbierende Folie sein; in einer besonderen Ausführungsform eine flexibel Solar- bzw- Photovoltaik-Folie.

Auf die Führungsschienen (8, 9) folgt von außen nach innen gesehen in einem Abstand von etwa 1 - 2 cm folgt wiederum auf beiden Seiten und über die gesamte Länge des Profils die zweite Führungsschiene (12). Sie ist vom Aufbau her genauso gestaltet wie die zuvor genannte Führungsschiene (8) und dient der Aufnahme des Führungs-Seils (13) einer Wärmeschutzeinrichtung (14, 26), beispielsweise eines Wärmeschutzrollos. Ebenso wie das zuvor genannte Beschattungsgewebe (11; 25), kann das Wärmeschutzrollo (14; 26) zwischen den Profilen aus dem Deckenbereich des Gewächshauses bis in den vorderen unteren Bereich aufgespannt werden. Zur Rückführung von Zugseilen können auch die Hohlräume (45) des Profils genutzt werden. Entsprechend erforderliche Umlenkrollen können am unteren Fußpunkt der Profile angebracht werden.

Da die Trägerprofilelemente (100, 110, 120) eine leichte Krümmung im errichteten Gewächshaus besitzen, sind auch die extrudierten Führungsschienen (8, 12) leicht gekrümmt, so dass bei Bewegung der Führungsseile (10, 13) Reibung auftritt, die ggf. störend bei der Betätigung der bewegbaren Flächen der Abdeckungskonstruktion ist. Aus diesem Grund können in einer weiteren Ausführungsform der Erfindung die besagten Profile der Führungsschienen, in denen die Seile oder Stangen (10, 13) bewegt werden, Rollen, Kugeln oder andere Gleitmittel aufweisen, um so die Reibung zwischen Führungs-Seil und Führungsschiene zu verringern und die Bewegungsabläufe zu optimieren.

Am unteren Abschluss des Profils (Stirnfläche) befinden sich über die gesamte Länge des Profils ein bis vier, vorzugweise drei, nebeneinander liegende, nach innen eingelassene Vertiefungen, Schienen oder Rillen (15, 34), die ein modulare Befestigungssystem darstellen. Mit Hilfe geeigneter Haken oder Schrauben, die in diese Vertiefungen und Rillen leicht eingeschoben und fixiert werden können, lassen sich verschiedene Komponenten der Gewächshaustechnik auf einfachste Weise befestigen, austauschen und entfernen. Außerdem kann hier ein Stahlseil (18) oder eine vergleichbare Spannvorrichtung am oberen und unteren Ende des Trägerprofils befestigt werden, welche(s) das Profil in eine leichte Krümmung zwingt und somit für Form und Stabilität des Gewächshauses sorgt. Weiterhin ist hier die Montage von Winkeln (30) denkbar, die an den Enden der Aluminiumprofile für eine sichere Befestigung am Gewächshaus-Rumpf (Stehwände) (28) eingesetzt werden können.

Die beiden genannten beweglichen Flächen (11, 14, 24) können unabhängig voneinander oder gleichzeitig stufenlos ein- oder ausgezogen werden, wodurch eine individuelle und flexible Abschattung der Pflanzen und/oder eine Wärmedämmung erreicht werden kann. Durch die sich zwischen den verschiedenen Lagen aus Folien, Beschattungsgewebe (photovoltaisch aktiv oder inaktiv) und Wärmeschutzrollo bildenden Luftschichten, die nur eine minimale Wärmeübertragung zulassen, kann eine maximale Wärmedämmung erreicht werden.

An dem modularen Befestigungssystem (15, 34) können verschiedene Komponenten der Gewächshaustechnik wie z.B. Beleuchtung, Photovoltaik, Schattierungslamellen, Sensoren, Aufhängungen für Pflanzkulturen, Vernebelungs-System, Führungen für Rohre und Kabel, etc. befestigt werden. Neben der Anbringung der für die Konstruktion relevanten Komponenten, wie dem zuvor genannten Spannvorrichtungen (18) und Winkeln zur Befestigung (30), kann hier zum Abschluss des unteren Ende des Profils (stirnseitig) auch eine Halterung für eine außen liegende Regenrinne (32) befestigt werden. Die produktionsbedingt offenen Enden der Aluminiumprofile können mit Endkappen aus Kunststoff (17) verschlossen werden.

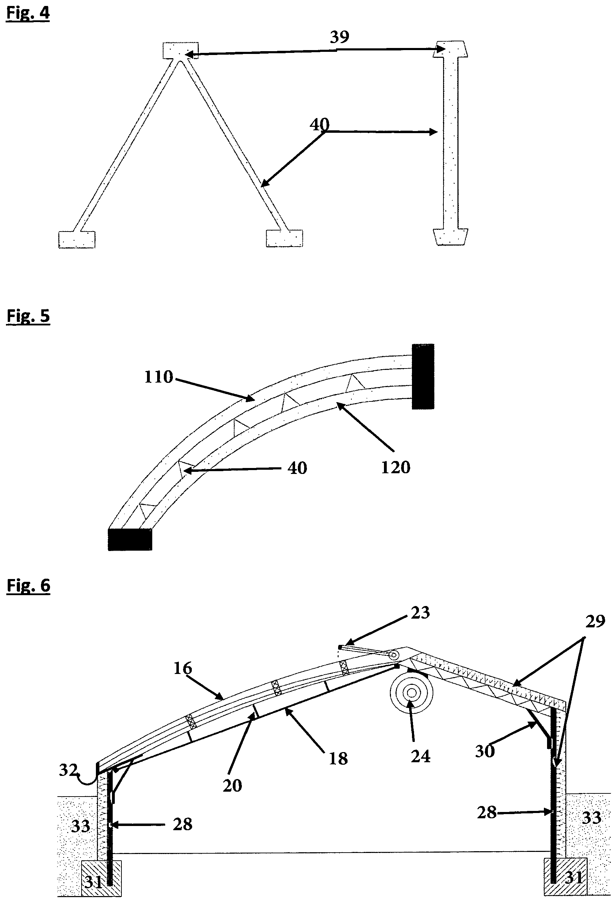

Die hier beschriebenen Trägerprofile vorzugsweise aus Aluminium sind, wie schon zuvor erwähnt, im Besonderen für die Verwendung in Gewächshäusern der chinesischen Lean-To Bauweise (Fig. 6) geeignet, da sie die hierfür nötige optimale Länge und Krümmung bieten. Der Einsatz in andersartig gestalteten Gewächshäusern ist aber ebenfalls möglich. Fig. 6 zeigt ein solches Lean-To Gewächshaus. Das Grundgerüst aus Stahlträgern (28) ist mittels Betonfundamenten (31) im Erdboden fixiert; gleichzeitig ist das gesamte Gewächshaus zwecks Ausnutzung der thermischen Masse des Erdbodens (33) zur Wärmeregulierung etwa einen Meter tief in den Boden eingelassen. Die Seiten des Gewächshauses und der hintere, nicht transparente Teil des Daches, der von Gitterträgern (27) getragen wird, sind zusätzlich mit einer Wärmedämmung (29) versehen. Die extrudierten Aluminiumprofile (16) sind unter anderem durch Stützwinkel (30) mit den anderen Bauteilen des Gewächshauses verbunden und bieten durch ihre Multi-Funktionalität die zuvor genannten Vorteile.

Wie bereits erwähnt, ist es durch das beschriebene Thermorollo und ggf. die doppelte Folienschicht, sowie zusätzlich auch durch das Schattengewebe möglich, im Inneren des Gewächshauses eine deutlich höhere Temperatur als außerhalb aufrecht zu erhalten. Jedoch muss bedacht werden, dass bei Verwendung von Aluminium das multifunktionale Aluminiumprofil, an dem die vorgenannten Gewebe und Folien befestigt sind, selber keinerlei thermische Isolation bietet. Da Aluminium eine hohe Wärmeleitfähigkeit besitzt (ca. 200 λ (W/(m^{∗}K)), ist das Gegenteil der Fall, und das Aluminiumprofil wirkt hier als Wärmebrücke (Kältebrücke), über die Wärme aus dem Innere des Gewächshauses nach außen abgegeben wird und damit verloren geht.

Um dies zu verhindern, bieten zwei weitere Ausführungen des Aluminiumprofils zwei verschiedene Arten der Isolation, die im Folgenden näher beschrieben werden.
Fig. 1 zeigt einen Teil eine Abdeckungskonstruktion aufgebaut aus einteiligen extrudierten Trägerprofilelementen (100). In Fig.1a wird die Abschattungsfläche (11) mittels ihrer Führungseinrichtungen (8)(9) ohne weitere Hilfsmittel bewegt und geführt. In Fig. 1b wird besagte Abschattungsfläche (11) zusätzlich über Rollen (45) geführt, welche entlang der Breite zwischen zwei benachbarten Trägerelementen (100) verteilt sind, und, wie gezeigt, auf den Quer- oder Stützstreben (5) angebracht sind, wobei in diesem Fall, die Querstreben zwischen zwei Trägerelementen (100) unterhalb der Abschattungsfläche (11), als mehr nach innen, angebracht sind.
Fig. 2 zeigt ein multifunktionales Aluminiumprofil mit thermischer Isolationsschicht aus Gummi. Das einzelne Aluminiumprofil ist von seinem Aufbau her gleichgestaltet wie das oben beschriebene multifunktionale Aluminiumprofil nach Fig. 1. Das Profil ist jedoch in dem Bereich zwischen den Führungsschienen für das Beschattungsgewebe (8), und der für das Wärmeschutzrollo (14) geteilt. Der nun entstandene obere Teil ist auf seiner Unterseite ("Teilungsstelle") über die gesamte Länge des Aluminiumprofils mit drei parallel angeordneten Befestigungsschienen (34) ausgestattet. Der untere Teil des Profils ist auf der gesamten Länge des Aluminiumprofils an der "Teilungsstelle" geschlossen; die Unterseite weist ebenfalls drei Befestigungseinheiten (34) auf. Die Stirnflächen der "Teilungsstellen" besitzen eine leichte Riffelung (35), um dem auf gesamter Länge des Profils eingefügten Gummiprofil (36) Halt zu geben. Das Gummiprofil besitzt eine Dicke von ca. 1 - 2 cm und ist derart gestaltet, dass es genau zwischen die Aluminium-Trägerprofilteile passt. Das Gummiprofil kann geklebt oder durch Vulkanisation mit der geriffelten Oberfläche des Aluminiumprofils verbunden werden. Zusätzlich gibt es die Möglichkeit, das Gummiprofil durch Schrauben zu fixieren (37). Dafür werden in die Schienen oder Vertiefungen (34) des oberen Teils an entsprechender Stelle die Schrauben (37) eingefügt, welche dann durch Bohrungen im Gummi-Profil (36) und an entsprechender Stelle angebrachten Bohrung in der Oberseite des unteren Teils des Aluminiumprofils gesteckt werden und im Inneren des unteren Aluminium-Trägerteils mit einer Mutter (38) fixiert werden. Das Innere des unteren Aluminiumprofils erreicht man zur Montage der Mutter (38) durch eine dafür vorgenommene Bohrung, die an entsprechender Stelle in der an der Unterseite des unteren Aluminiumteils angebracht wird. Durch das zuvor genannte Prinzip der Verschraubung der beiden Aluminiumprofile (oberes Teilstück und unteres Teilstück) ist nun weiterhin eine modulare Verlängerung des oberen Teilstücks (= Hauptteil) durch beliebig viele untere Teilstücke (= Zusatzmodul) durch Verschraubung denkbar. Somit kann, je nach Bedarf, entweder nur das Hauptteil, mit dem Adapter für ETFE-Folien, dem Bereich für bedarfsangepasste Bohrungen zur Befestigung von Querstreben, einer Führungsschiene und dem modularen Befestigungssystem an der Unterseite verwendet werden. Das Hauptteil kann aber auch durch Verschraubung mit beliebig vielen Zusatzmodulen, die jeweils eine weitere Führungsschiene bieten, verlängert werden. Dabei kann auch frei gewählt werden, ob und zwischen welchen Modulen die isolierende Gummischicht eingefügt wird.
Fig. 3 zeigt ein erfindungsgemäßes multifunktionales Aluminiumprofil mit Abstandshaltern aus Edelstahl (oder Materialien wie Aluminium, Kunststoff, Magnesiumlegierung etc.). Ähnlich wie das beschriebene multifunktionelle Aluminiumprofil nach Fig. 2 ist das Trägerprofil hier in ein oberes und ein unteres Teilstück aufgeteilt. Die Unterseite des oberen Teilstücks ist dabei gleichgestaltet wie die Oberseite des unteren Teilstücks. Hier ist nunmehr eine Einrastvorrichtung eingelassen, in der die dafür speziell gestalteten Köpfchen (39) der Abstandshalter (40) einrasten. Diese Vorrichtung ist dabei Teil der extrudierten Aluminiumprofile und zieht sich über deren gesamte Länge. Sie ist als etwa 2 cm tiefe Vertiefung ausgearbeitet, die sich von anfangs etwa 2,5 cm Öffnungsbreite auf etwa 1 - 1.5 cm an ihrer tiefsten Stelle verjüngt. In einer Tiefe von etwa 1 cm liegt die eigentliche Einrastvorrichtung. Hier verbreitert sich die Öffnung von etwa 1,5 cm auf 2,1 cm. Wird das etwa 2 cm breite Köpfchen (39) des Abstandhalters (40) in die Öffnung hineingedrückt, biegt sich das die Öffnung formende Bauteil kurzzeitig auseinander, um sich unmittelbar danach in seine Ausgangsposition zurück zu bewegen und somit das Köpfchen einrasten zu lassen. Der Einrastmechanismus kann dabei auf verschiedene an sich bekannte Arten gestaltet werden. So kann er eine Nase Kante in der Seitenwand der Öffnung der Vorrichtung aufweisen, wodurch sich beim Eindrücken des Köpfchens (3) des Abstandshalters (40) die gesamte Seitenwand lokal kurzzeitig verbiegen muss. Es kann aber auch ein flexibler Überhang (42) im Profil vorliegen, der beim Eindrücken des Köpfchens (39) zurückgedrückt wird, wodurch der Rest des Bauteils sich beim Einsetzen der Abstandshalter nicht verbiegen muss. Anstelle des geschlitzten Einrastmechanismus kann auch die Elastizität des Profils ausreichend sein, um das Köpfchen des Abstandhalters einzudrücken zu können. Um zusätzlichen Halt für den Abstandshalter zu erlangen, können die Köpfchen außerdem verklebt oder verschraubt werden. Auch das Einbringen von reibungsfördernden Mitteln sind denkbar, um den Abstandshalter in Position zu halten.
Der Abstandshalter selbst (Fig. 4) ist ein Gussteil, das aus verschiedenen Materialien hergestellt werden kann (Edelstahl, Aluminium, Magnesium, oder Legierungen davon oder Kunststoff). Ein einzelner Abstandshalter ist vorteilhafterweise in der Form eines im Wesentlichen gleichseitigen Dreiecks gestaltet. Die an jeder Ecke des Dreiecks befindlichen Köpfchen (39) sind durch Streben miteinander verbunden, wobei jedoch die Unterseite des Dreiecks vorzugsweise offen, d.h. ohne Strebe bleibt. Fig. 5 zeigt die in das zweigeteilte Aluminiumprofil eingebauten Abstandshalter in Seitenansicht.
Fig. 6 zeigt, wie bereits erwähnt, ein Gewächshaus in der chinesischen Lean-To Bauweise, welches mit den erfindungsgemäßen Trägerprofilstrukturen bzw. der erfindungsgemäßen Abdeckungskonstruktion ausgestattet ist.

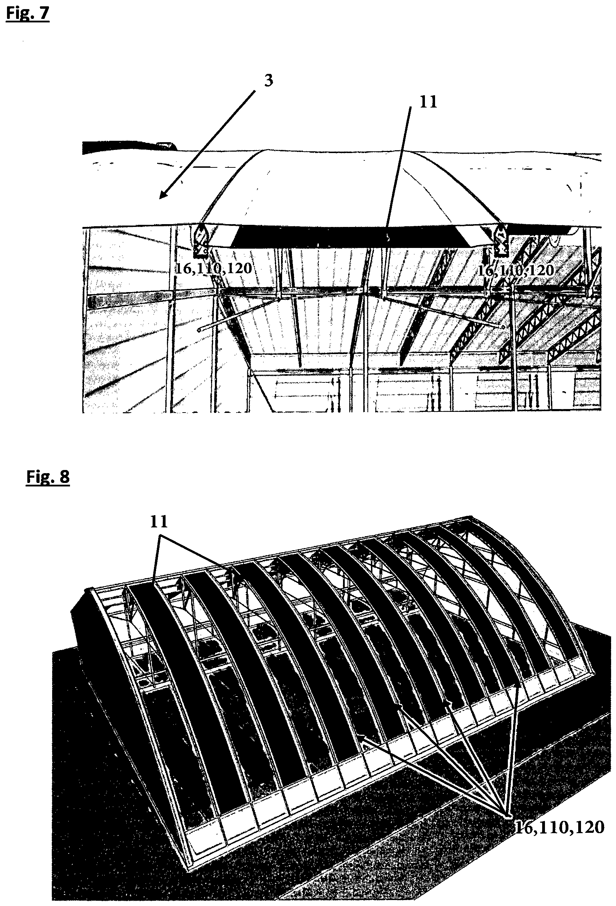

Fig. 7 zeigt eine 3D- Durchsicht durch das erfindungsgemäße Gewächshaus, welches mit einer Photovoltaik- Beschattungseinrichtung, beispielsweise einer organischen Solarzellenfolie unterhalb der nach außen abdeckenden lichtdurchlässigen Schutzfolie ausgestattet ist.
Fig. 8 zeigt eine 3D-Sicht in ein erfindungsgemäßes Gewächshaus, welches mit Bahnen oder Flächen von Beschattungseinrichtungen (z.B. organische Solarfolien) ausgestattet ist, welche durch Bahnen oder Flächen getrennt sind, die keine Beschattungseinrichtung aufweisen.

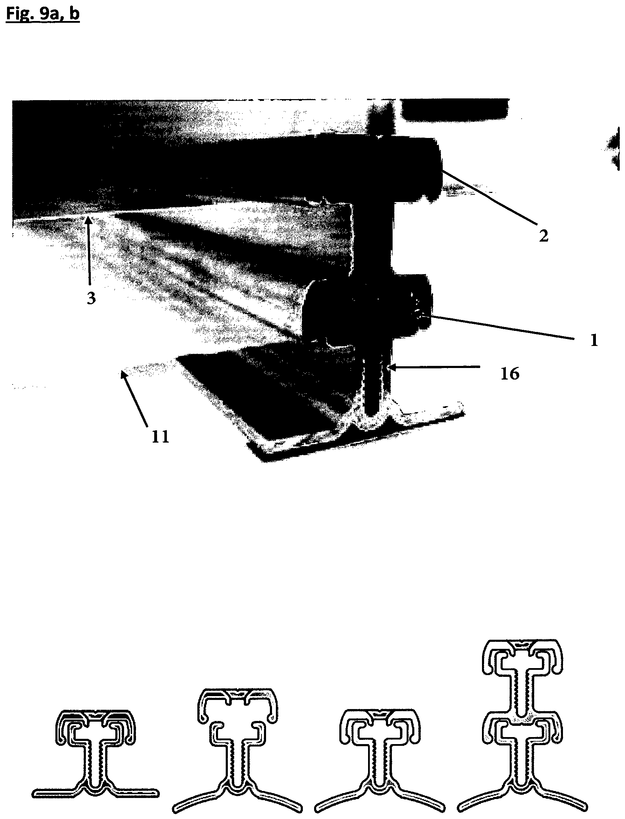

Fig. 9 a,b zeigt weitere Ausführungsformen der erfindungsgemäßen extrudierten Trägerprofilstrukturen und die Einspannung und Befestigung von benötigten Elementen. Der Fuß des untersten Trägerprofilelementes kann dabei gerade oder gebogen sein, abhängig von dem Befestigungsuntergrund für diese Elemente, sofern diese nicht frei getragen werden können.

## Patentansprüche

1. Trägerprofilstruktur aus Leichtmetall oder auf Basis von Leichtmetall, umfassend mindestens ein oberes und ein unteres extrudiertes Trägerprofil-Element (110, 120) wobei jedes Trägerprofilelement eine im Wesentlichen rechteckige geschlossene Form mit einer äußeren und einer inneren Stirnfläche und zwei Seitenflächen aufweist, **dadurch gekennzeichnet, dass**
(i) das obere und untere Trägerprofilelement (110, 120) in Längsrichtung des extrudierten Profils mindestens ein Paar Führungsschienen (8, 12) als Teil des Profils aufweist, die an den gegenüberliegen Seitenflächen jedes Profilelementes im Wesentlichen über deren gesamte Länge angeordnet sind und zur Befestigung und Bewegung von photovoltaisch aktiven oder inaktiven Beschattungseinrichtungen (11) und Einrichtungen zur Wärmedämmung (14) vorgesehen sind;
(ii) das obere Trägerprofilelement (110) an seiner äußeren Stirnfläche im Wesentlichen über die gesamte Länge eine Vorrichtung zum Befestigen einer flexiblen spannbaren Folie (3) aufweist;
(iii) das untere Trägerprofilelement (120) an seiner äußeren Stirnfläche mindestens eine im Wesentlichen über die gesamte Länge in das Profil eingelassene Schiene, Vertiefung oder Aussparung (15, 34) zur Aufnahme und Befestigung von Versorgungs-, Beleuchtungs-, Photovoltaik-, und Spannvorrichtungen, Pflanzkultursystemen, Hilfsmitteln, und Werkzeugen oder zur Aufnahme von Mitteln zur Befestigung weiterer Profileinheiten aufweist;
(iv) die mindestens beiden Trägerprofilelemente über ihre inneren Stirnflächen durch ein Wärme-/Kälteisolationselement (36, 39, 40, 41, 42) mit einander verbunden sind,
(v) mindestens ein Trägerprofilelement (110, 120) an mindestens einer Seitenfläche eine oder mehrere Bohrungen (4) zur Aufnahme von Querstreben, Stützen, Verbindungen, Rohren, Belüftungselementen oder anderen Bauelementen (5, 6) aufweist, und
(vi) die gesamte Trägerprofilstruktur inklusive der Trägerprofilelemente entlang ihrer Längsachse im Wesentlichen gerade oder bogenförmig ist, oder durch an ihr befestigte Spannvorrichtungen (18, 19) bogenförmig verspannt werden kann.

2. Trägerprofilstruktur nach Anspruch 1, **dadurch gekennzeichnet, dass** das besagte Wärme-/Kälteisolationselement (36, 39, 40, 41, 42) gebildet wird aus einem mit Luft oder einem Wärmeisolierungsmedium oder beidem gefüllten Zwischenraum zwischen dem oberen Profilelement (110) und dem unteren Profilelement (120).

3. Trägerprofilstruktur nach Anspruch 2, **dadurch gekennzeichnet, dass** ein gleichgroßer Zwischenraum zwischen dem oberen und unteren Trägerprofilelement sichergestellt wird durch Abstandshalter (40), welche entlang der Längsausdehnung der Trägerstruktur angeordnet und fixiert sind, wobei die Abstandshalter (40) an ihren beiden den Profilelementen zugewandten Enden Einrichtungen (39) aufweisen, die es ermöglichen, sie fest mit entsprechend passenden Einrichtungen (41, 42) an den Stirnseiten der beiden Trägerprofileinheiten (110, 120) zu verbinden.

4. Trägerprofilstruktur nach Anspruch 3, **dadurch gekennzeichnet, dass** die inneren Stirnseiten der Profilelemente (110, 120), die über die Abstandshalter (40) verbunden werden, eine über die Länge des Profils verlaufende Führungsnut (43) als Teil des extrudierten Profils aufweisen, und die Einrichtungen (39) Köpfe oder Verdickungen an den Abstandshaltern (40) darstellen, die es ermöglichen, dass die Abstandshalter in besagter Führungsnut positioniert und gehalten werden.

5. Trägerprofilstruktur nach Anspruch 3 oder 4, **dadurch gekennzeichnet, dass** die Einrichtungen (41, 42) Einrastvorrichtungen an den inneren Stirnflächen der Trägerprofilelemente (110, 120) darstellen so dass diese durch Zusammenstecken und Einrasten über besagte Abstandshalter miteinander fest und ggf. reversibel verbunden werden können.

6. Trägerprofilstruktur nach einem der Ansprüche 1 - 5, **dadurch gekennzeichnet, dass** die Vorrichtung zum Befestigen einer spannbaren flexiblen Folie (3) an der Stirnfläche des oberen Trägerprofilelements (110) einen im Wesentlichen über die gesamte Länge des Profilelementes verlaufenden Adapter (1) als Teil des extrudierten Profils sowie ein entsprechend gestaltetes und positioniertes Befestigungs- oder Klemmprofil (2) umfasst, wobei die flexible Folie oder die Abschattungs- oder Wärmedämmfläche nach Einlegen zwischen Adapter und aufsteckbaren Klemmprofil durch Verkürzen gespannt und festgeklemmt werden kann.

7. Trägerprofilstruktur nach einem der Ansprüche 1 - 6, **dadurch gekennzeichnet, dass** mindestens ein Trägerprofilelement (110, 120) mit einer passiven oder aktiven Belüftung ausgestattet ist.

8. Modulares Trägerprofilsystem umfassend eine Trägerprofilstruktur nach einem der Ansprüche 1 - 7, **dadurch gekennzeichnet, dass** zwischen dem oberen Trägerprofilelement (110) und dem unteren Trägerprofilelement (120) ein oder mehrere weitere Profilelemente angeordnet sind, welche mindestens das Merkmal (i) des Anspruchs 1 aufweisen.

9. Abdeckungskonstruktion für ein Foliengewächshaus umfassend
(i) mindestens zwei Trägerprofilstrukturen oder modulare Profilsysteme gemäß einem der Ansprüche 1 - 8, wobei die Trägerprofilelemente (110, 120) mit einem bestimmten Abstand parallel zueinander angeordnet sind und über die Verbindungselemente (5, 6) miteinander in Verbindung stehen und zusammen mit der an der Außenseite im Wesentlichen über die gesamte Länge angebrachten flexiblen transparenten Folie (3) eine steife Fläche bilden.

10. Abdeckungskonstruktion nach Anspruch 9, **dadurch gekennzeichnet, dass** sie eine manuell oder durch Motorkraft aufrollbare oder faltbare Wärme-/ Kältedämmmatte (14, 24) aufweist, welche in den Führungsschienen (12), die hinter der Außenfolie (3) innenliegend in den Trägerprofilelementen (110, 120) angeordnet sind, über Führungsseile (13) geschützt vor Witterungseinflüssen bewegt werden kann.

11. Abdeckungskonstruktion nach Anspruch 9 oder 10, **dadurch gekennzeichnet, dass** sie eine manuell oder durch Motorkraft aufrollbare, faltbare oder klappbare photovoltaisch aktive oder inaktive Beschattungseinrichtung (11) aufweist, welche in den Führungsschienen (8), die hinter der Außenfolie (3) innenliegend in den Trägerprofilelementen (110, 120) angeordnet sind, über Führungsseile (10) bewegt werden kann.

12. Abdeckungskonstruktion nach einem der Ansprüche 9 - 11, **dadurch gekennzeichnet, dass** sie von außen nach innen angeordnet eine lichtdurchlässige verspannte Folie (3), eine Beschattungseinrichtung (11) sowie eine Wärme-/ Kältedämmungsmatte (14) aufweist.

13. Abdeckungskonstruktion nach einem der Ansprüche 9 - 12, **dadurch gekennzeichnet, dass** die Querstreben (5)(6) mit Rollen ausgestattet sind, welche die Bewegung der darüber angebrachten verschiebbaren oder aufrollbaren Beschattungseinrichtung (11) erleichtern.

14. Foliengewächshaus umfassend mindestens eine Abdeckungskonstruktion gemäß einem der Ansprüche 9 - 13.

15. Foliengewächshaus nach Anspruch 14, **dadurch gekennzeichnet, dass** es auf der chinesischen Lean-To Bauweise basiert, welche ein Gewächshaus umfasst, das zur Wärmeregulierung etwa einen Meter tief in den Boden eingelassen ist, und dessen Seiten sowie der hintere nicht transparente Teil des von Gitterträgern (27) getragenen Daches mit einer Wärmedämmung (29) versehen sind, wobei das Grundgerüst aus Stahlträgern (28) mittels Betonfundamenten (31) im Erdboden fixiert ist.

## Claims

1. Support profile structure made from light metal or based on light metal, comprising at least one upper and one lower extruded support profile element (110, 120), where each support profile element has an essentially rectangular closed shape with an outer face and an inner face and two sides, **characterised in that**
(i) the upper and lower support profile elements (110, 120) have, in the longitudinal direction of the extruded profile, at least one pair of guide rails (8, 12) as part of the profile, which are arranged on the opposite sides of each profile element essentially over its entire length and are intended for the attachment and movement of photovoltaically active or inactive shading devices (11) and devices for thermal insulation (14);
(ii) the upper support profile element (110) has, on its outer face, essentially over the entire length, a device for attaching a flexible tensionable sheet (3);
(iii) the lower support profile element (120) has, on its outer face, at least one rail, recess or cut-out (15, 34) let into the profile essentially over the entire length, for the accommodation and fixing of services supply, illumination, photovoltaic and tensioning devices, plant culture systems, aids, and tools or for the accommodation of means for the attachment of further profile units;
(iv) the at least two support profile elements are connected to one another via their inner faces by a heat/cold insulation element (36, 39, 40, 41, 42),
(v) at least one support profile element (110, 120) has, on at least one side, one or more holes (4) for the accommodation of cross struts, posts, connectors, pipes, ventilation elements or other structural members (5, 6), and
(vi) the entire support profile structure, including the support profile elements, is essentially straight or curved along its longitudinal axis, or can be tensioned in a curved manner by tensioning devices (18, 19) attached to it.

2. Support profile structure according to Claim 1, **characterised in that** the said heat/cold insulation element (36, 39, 40, 41, 42) is formed from an interspace, filled with air or a thermal insulation medium or both, between the upper profile element (110) and the lower profile element (120).

3. Support profile structure according to Claim 2, **characterised in that** an interspace of equal size is ensured between the upper and lower support profile elements by spacers (40), which are arranged and fixed along the length extension of the support structure, where the spacers (40) have, at their two ends facing the profile elements, devices (39) which enable them to be strongly connected to matching devices (41, 42) on the faces of the two support profile units (110, 120).

4. Support profile structure according to Claim 3, **characterised in that** the inner faces of the profile elements (110, 120), which are connected via the spacers (40), have a guide groove (43) running over the length of the profile as part of the extruded profile, and the devices (39) are heads or thickenings on the spacers (40) which enable the spacers to be positioned and held in said guide groove.

5. Support profile structure according to Claim 3 or 4, **characterised in that** the devices (41, 42) are snap-in devices on the inner faces of the support profile elements (110, 120), so that the latter can be connected strongly and optionally reversibly to one another via said spacers by pushing together and snapping in.

6. Support profile structure according to one of Claims 1 - 5, **characterised in that** the device for the attachment of a tensionable flexible sheet (3) to the face of the upper support profile element (110) comprises an adapter (1), running essentially over the entire length of the profile element, as part of the extruded profile and a correspondingly shaped and positioned attachment or clamping profile (2), where the flexible sheet or the shading or thermal insulation area can be tensioned and firmly clamped by shortening after insertion between adapter and attachable clamping profile.

7. Support profile structure according to one of Claims 1 - 6, **characterised in that** at least one support profile element (110, 120) is fitted with passive or active ventilation.

8. Modular support profile system comprising a support profile structure according to one of Claims 1 - 7, **characterised in that** one or more further profile elements which have at least feature (i) of Claim 1 are arranged between the upper support profile element (110) and the lower support profile element (120).

9. Cover construction for a sheeting greenhouse, comprising
(i) at least two support profile structures or modular profile systems according to one of Claims 1 - 8, where the support profile elements (110, 120) are arranged parallel to one another at a certain separation and are connected to one another via the connecting elements (5, 6) and form a rigid area together with the flexible transparent sheet (3) installed on the outside essentially over the entire length.

10. Cover construction according to Claim 9, **characterised in that** it has a heat/cold insulation mat (14, 24) which can be rolled up or folded manually or by motor force and which can be moved in the guide rails (12), which are arranged behind the outer sheet (3) inside the support profile elements (110, 120), via guide cables (13), protected against weather influences.

11. Cover construction according to Claim 9 or 10, **characterised in that** it has a photovoltaically active or inactive shading device (11), which can be rolled up or folded manually or by motor force and which can be moved in the guide rails (8), which are arranged behind the outer sheet (3) inside the support profile elements (110, 120), via guide cables (10).

12. Cover construction according to one of Claims 9 - 11, **characterised in that** it has, arranged from the outside inward, a light-transmitting tensioned sheet (3), a shading device (11) and a heat/cold insulation mat (14).

13. Cover construction according to one of Claims 9 - 12, **characterised in that** the cross members (5)(6) are fitted with rollers, which ease movement of the shading device (11) installed above, which can be slid or rolled up.

14. Sheeting greenhouse comprising at least one cover construction according to one of Claims 9 - 13.

15. Sheeting greenhouse according to Claim 14, **characterised in that** it is based on the Chinese lean-to design, which comprises a greenhouse which is sunk into the ground by about 1 meter for heat regulation, and whose sides and the rear non-transparent part of the roof supported by lattice supports (27) are provided with thermal insulation (29), where the framework comprising steel supports (28) is fixed in the ground by means of concrete foundations (31).

## Revendications

1. Structure profilée de support réalisée à partir d'un métal léger ou à base de métal léger, comprenant au moins un élément profilé de support supérieur et un élément profilé de support inférieur extrudés (110, 120), dans laquelle chaque élément profilé de support présente une forme fermée essentiellement rectangulaire qui comporte une face externe et une face interne ainsi que deux côtés, **caractérisée en ce que** :
(i) les éléments profilés de support supérieur et inférieur (110, 120) comportent, dans la direction longitudinale du profilé extrudé, au moins une paire de rails de guidage (8, 12) en tant que partie du profilé, lesquels sont agencés sur les côtés opposés de chaque élément profilé essentiellement sur toute la longueur afférente et sont destinés à l'attachement et au déplacement de dispositifs de pare-soleil actifs ou inactifs du point de vue photovoltaïque (11) et de dispositifs pour l'isolation thermique (14) ;
(ii) l'élément profilé de support supérieur (110) comporte, sur sa face externe, essentiellement sur toute la longueur, un dispositif pour attacher une feuille formant bâche flexible pouvant être mise sous tension (3) ;
(iii) l'élément profilé de support inférieur (120) comporte, sur sa face externe, au moins un rail, un évidement ou une découpe (15, 34) implanté(e) dans le profilé essentiellement sur toute la longueur, pour le logement et la fixation de dispositifs de fourniture de services, d'éclairage, photovoltaïques et de mise sous tension, de systèmes de culture de plantes, de dispositifs d'assistance, et d'outils ou pour le logement de moyens pour l'attachement d'autres unités profilées ;
(iv) les au moins deux éléments profilés de support sont connectés l'un à l'autre ou les uns aux autres via leurs faces internes par un élément d'isolation vis-à-vis de la chaleur/du froid (36, 39, 40, 41, 42),
(v) au moins un élément profilé de support (110, 120) comporte, sur au moins un côté, un ou plusieurs trou(s) (4) pour le logement d'entretoises, de tiges formant axes, de connecteurs, de tuyaux, d'éléments de ventilation ou d'autres éléments structurels (5, 6), et
(vi) la totalité de la structure profilée de support, y compris les éléments profilés de support, est essentiellement rectiligne ou incurvée suivant son axe longitudinal, ou elle peut être mise sous tension d'une façon incurvée par des dispositifs de mise sous tension (18, 19) qui lui sont attachés.

2. Structure profilée de support selon la revendication 1, **caractérisée en ce que** ledit élément d'isolation vis-à-vis de la chaleur/du froid (36, 39, 40, 41, 42) est formé à partir d'un espace intermédiaire, rempli d'air ou d'un milieu d'isolation thermique ou des deux, entre l'élément profilé de support supérieur (110) et l'élément profilé de support inférieur (120).

3. Structure profilée de support selon la revendication 2, **caractérisée en ce qu'**un espace intermédiaire de dimension égale est assuré entre les éléments profilés de support supérieur et inférieur par des espaceurs (40), lesquels sont agencés et fixés suivant l'extension en longueur de la structure de support, dans laquelle les espaceurs (40) comportent, au niveau de leurs deux extrémités qui font face aux éléments profilés, des dispositifs (39) qui permettent leur connexion ferme et solide sur des dispositifs conjugués (41, 42) sur les faces des deux unités profilées de support (110, 120).

4. Structure profilée de support selon la revendication 3, **caractérisée en ce que** les faces internes des éléments profilés (110, 120), lesquels sont connectés via les espaceurs (40), comportent une gorge de guidage (43) qui court suivant la longueur du profilé en tant que partie du profilé extrudé, et les dispositifs (39) sont des têtes ou des renflements sur les espaceurs (40) qui permettent le positionnement et le maintien des espaceurs dans ladite gorge de guidage.

5. Structure profilée de support selon la revendication 3 ou 4, **caractérisée en ce que** les dispositifs (41, 42) sont des dispositifs de fixation par pression ou encliquetage sur les faces internes des éléments profilés de support (110, 120), de telle sorte que ces derniers puissent être connectés de façon ferme et solide et en option, de façon réversible l'un à l'autre ou les uns aux autres via lesdits espaceurs par poussée en direction l'un de l'autre ou les uns des autres et par fixation par pression ou encliquetage.

6. Structure profilée de support selon l'une des revendications 1 à 5, **caractérisée en ce que** le dispositif pour l'attachement d'une feuille formant bâche flexible pouvant être mise sous tension (3) sur la face de l'élément profilé de support supérieur (110) comprend un adaptateur (1), qui court essentiellement sur toute la longueur de l'élément profilé, en tant que partie du profilé extrudé et un profilé d'attachement ou de serrage conformé et positionné en correspondance (2), dans laquelle la feuille formant bâche flexible ou la zone de pare-soleil ou d'isolation thermique peut être mise sous tension et serrée fermement par raccourcissement après insertion entre l'adaptateur et le profilé de serrage pouvant être attaché.

7. Structure profilée de support selon l'une des revendications 1 à 6, **caractérisée en ce qu'**au moins un élément profilé de support (110, 120) reçoit en montage par adaptation une ventilation active ou passive.

8. Système de profilé de support modulaire comprenant une structure profilée de support selon l'une des revendications 1 à 7, **caractérisé en ce qu'**un ou plusieurs autres élément(s) profilé(s) qui comporte(nt) au moins la caractéristique (i) de la revendication 1 est/sont agencé(s) entre l'élément profilé de support supérieur (110) et l'élément profilé de support inférieur (120).

9. Construction de recouvrement pour une serre avec bâche(s), comprenant :
(i) au moins deux structures profilées de support ou systèmes profilés modulaires selon l'une des revendications 1 à 8, dans laquelle les éléments profilés de support (110, 120) sont agencés parallèlement l'un à l'autre ou les uns aux autres selon une certain séparation et sont connectés l'un à l'autre ou les uns aux autres via les éléments de connexion (5, 6) et ils forment une zone rigide en association avec la feuille formant bâche transparente flexible (3) qui est installée sur l'extérieur essentiellement sur toute la longueur.

10. Construction de recouvrement selon la revendication 9, **caractérisée en ce qu'**elle comporte une bâche formant couche d'isolation vis-à-vis de la chaleur/du froid (14, 24) qui peut être enroulée ou repliée manuellement ou au moyen de la force d'un moteur et qui peut être déplacée dans les rails de guidage (12), lesquels sont agencés derrière la feuille formant bâche externe (3) à l'intérieur des éléments profilés de support (110, 120), via des câbles de guidage (13), bénéficiant d'une protection vis-à-vis des influences météorologiques.

11. Construction de recouvrement selon la revendication 9 ou 10, **caractérisée en ce qu'**elle comporte un dispositif de pare-soleil actif ou inactif du point de vue photovoltaïque (11), lequel peut être enroulé ou replié manuellement ou au moyen de la force d'un moteur et lequel peut être déplacé dans les rails de guidage (8), lesquels sont agencés derrière la feuille formant bâche externe (3) à l'intérieur des éléments profilés de support (110, 120), via des câbles de guidage (10).

12. Construction de recouvrement selon l'une des revendications 9 à 11, **caractérisée en ce qu'**elle comporte, agencés de l'extérieur vers l'intérieur, une feuille formant bâche mise sous tension laissant passer la lumière (3), un dispositif de pare-soleil (11) et une bâche formant couche d'isolation vis-à-vis de la chaleur/du froid (14).

13. Construction de recouvrement selon l'une des revendications 9 à 12, **caractérisée en ce que** les entretoises (5)(6) reçoivent en montage des galets ou rouleaux, lesquels facilitent le déplacement du dispositif de pare-soleil (11) qui est installé au-dessus, lequel peut être coulissé ou enroulé.

14. Serre avec bâche(s) comprenant au moins une construction de recouvrement selon l'une des revendications 9 à 13.

15. Serre avec bâche(s) selon la revendication 14, **caractérisée en ce qu'**elle est basée sur la conception orientée type chinois, laquelle comprend une serre qui est enterrée dans le sol sur environ 1 mètre à des fins de régulation thermique, et dont les côtés et la partie non transparente arrière du toit bénéficiant d'un support au moyen de supports en treillis (27) sont munis d'une isolation thermique (29), dans laquelle l'ossature qui comprend des supports en acier (28) est fixée dans le sol au moyen de fondations en béton (31).
